# EUROPEAN PATENT APPLICATION

(11) **EP 2 946 659 A1**
(43) Date of publication of application: **25.11.2015**
(21) Application number: 15168626.8
(22) Date of filing: 21.05.2015
(51) Int. Cl.: A01K 13/00, A01K 27/00

(54) **A PROTECTIVE FLEXIBLE GARMENT FOR AN ANIMAL, A METHOD OF FITTING THE PROTECTIVE FLEXIBLE GARMENT ON THE ANIMAL, AND USE OF THE PROTECTIVE FLEXIBLE GARMENT**

(30) Priority: 21.05.2014 DK 201470295
(71) Applicant: Northmate ApS, 5792 Årslev (DK)
(72) Inventor: Lindskov, Frederik Estrup, 3080 Tikøb (DK); Hansen, Mikkel, 1752 Copenhagen V (DK)
(74) Representative: Holme Patent A/S

(57) **Abstract**

A protective flexible garment (1) for an animal (37) comprises a belly part (2) defining a longitudinal axis (X), side parts (3a,3b) extending on opposite sides of the belly part (2), a breast part (6) extending from a front end of the belly part (2) between the side parts (3a,3b) along a longitudinal axis of the belly part (2) towards a free breast part end. The side parts (3a,3b) have free side edges (13a,13b) provided with fasteners (14a,14b) for joining the side parts (3a,3b) on the back of the animal (37). A plurality of channels (15,16,17;15a,16a,17a;15b,16b,17b;18,19) accommodating gathering means (25) serves to make the garment (1) size and shape adjustable

## Description

The present invention relates generally to a protective flexible garment for an animal comprising
- a belly part defining a longitudinal axis,
- side parts extending on opposite sides of the belly part,
- a breast part extending from a front end of the belly part between the side parts along a longitudinal axis of the belly part towards a free breast part end.

Animal garments generally are poor in providing comfortable protection against cold weather for the animal. Prior art garments often irritate the animal wearing it, e.g. a dog, during running and moving, and the garments are complex structures that are very difficult to put on the animal. Most known animal garments are simply blankets, optionally with belly straps, similar to horse blankets, that do only protect the back of the animal.

US patent no. 5,060,458 relates to a dog coat that has a back cover and a short breast cover. The coat does not cover the belly and is held together by means of hook and loop fastener straps.

US patent no. 6,138,611 relates to a similar dog coat consisting of two detachable parts mutually connectable by means of hook and loop fastener straps on the dog's side. A front section covers the belly and the breast, and a separate back section covers the back.

For both prior art dog coats the hook and loop fasteners may then serve as a tool to adjust the size of the dog coat to the dog. Among others due to the mutual dependency of where the engaging hooks and loops are positioned on the coat parts these known dog coats have considerable disadvantages when adjusting size and fitting the coat to the dog. The distance between hook on one part and loop on another part needs to be selected so as to facilitate a good fit and attachment between hook and loop.

If the dog is too big the hook and loop may not reach each other to fastening extend, or if the hook and loop is too close the combined coat will become too big for the dog.

Another huge disadvantage of these prior art dog coats is that if the dog coat contacts something when the dog exercises, the dog scratches itself, bite the free flaps or edges of the dog coat, etc. there is a great risk that the hook and loop detach and the coat drops off some unknown place. Since hook and loop fasteners are provided on both opposite sides of the dog's body, the known coats are very vulnerable to mechanical contact with the environment. As soon as one hook and loop fastener has opened the remaining hook and loop fasteners become more susceptible to open unintentionally too. If the dog coat fall off the dog, it may be very difficult to locate. Moreover, the hook and loop fastener cannot make the known coats to conform tightly to animal body shape and size. So, although hook and loop fasteners are good fasteners, they are not always the best option for an active animal.

Yet a further disadvantage of these known prior art garments for animals is the limited ability to fit tightly to the animal at any other spot than where the hook and loop fasteners meet.

It is a main aspect of the present invention to provide an alternative dog garment that remedies the disadvantages of the prior art dog garments and can be used for other kinds of animals as well, in particular four-legged animals.

It is a second aspect of the present invention to provide an animal protective garment of the kind mentioned in the opening paragraph that fits both male and female animals.

It is a third aspect of the present invention to provide a protective garment of the kind mentioned in the opening paragraph that protects the animal against adverse weather conditions.

It is a fourth aspect of the present invention to provide a protective garment of the kind mentioned in the opening paragraph that allows maximum comfort for the animal wearing it.

It is a fifth aspect of the present invention to provide a protective garment of the kind mentioned in the opening paragraph that accommodates animals, such as dogs and cats, of different sizes.

It is a sixth aspect of the present invention to provide a protective garment of the kind mentioned in the opening paragraph that the animal cannot tear off deliberately or accidentally.

It is a seventh aspect of the present invention to provide a protective garment of the kind mentioned in the opening paragraph that is versatile and has a high degree of freedom for customised fitting an animal.

It is an eighth aspect of the present invention to provide a protective garment that has no free flaps or edges for the animal to reach and use to undress when wearing the protective garment.

The novel and unique whereby these and other aspects are achieved according to the present invention consist in that the side parts have free side edges provided with a fastener for joining the side parts on the back of the animal.

Freezing snow, soaking rain and chilly wind have an unfortunate habit of bypassing normal outdoor animal wear as a consequence of open parts and a general lack of precise fitting.

Instead of joining several coat parts on both sides of the animal's body, which the animal can reach with it's snout and paws, as in the prior art devices discussed above, the protective flexible garment according to the present invention is assembled around the animal's body by joining the side parts on the back of the animal, thus the garment of the present invention wraps around the dog' ribcage.

The back, and thus the free side edges of the side parts, are easily visible and conveniently accessible for the person dressing the animal, but not easy accessible for the animal itself. The working position for the person dressing the animal is favourable, even if the animal lays down flat or sits, and by only having one main joining action of the main parts of the garment, this joining is less vulnerable to open in response to the animals movements or physical contact with environmental factors, such as the brushwood. So the protective flexible garment is much more handy and manoeuvrable than known garments for both the animal and the person dressing the animal.

Preferably the fastener(s) run(s) along the topline, thus along the length of the animal's back, measured along the top of the spine from the withers - the high part of the back between the shoulders, where the neck joins the body, - to the base of the tail where the tail joins the body.

To allow a person to custom-fit size and shape of a certain protective flexible garment to a certain animal the garment may have a plurality of channels accommodating gathering means, such as an elastic means.

Within the context of the present invention the term "gathering means" is a means that can be shortened or lengthened to adjust channel length. It may be a simple cord or thread, and/or have inherent elasticity. It runs inside an associated channel. When a gathering means of the garment is pulled inside a stitched channel the area along the channel is drawn into puckers and garment size locally reduced. Upon relaxation or lengthening of the gathering means the length of the associated channel can be made longer again, albeit the length cannot exceed the maximum length of the channel. The more spaced apart channels with gathering means the higher degree of freedom to custom-fit the garment.

So the gathering means serves for adjusting the size and/or shape of any of the belly part, the breast part, or one or both of the side parts. The length of the gathering means, and optionally the elasticity of the gathering means, may decide on a reduced gathered length of the channel inside which the gathering means runs, or on an increased length of a previously gathered channel, inside which the gathering means has been relaxed of loosened. Thus upon fixation of the length of the gathering means, the fixed length decides the length of the associated channel of the garment part at the location of said associated channel. By keeping a gathering means in form of an elastic means in a certain stretched or extended length and preventing it from retracting, or by relaxing a too stretched elastic means, a local dimension of the garment part can be selected, affected and adjusted along the length of the associated channel.

In a preferred embodiment the channels are provided to, in particular, enable adjusting at least one of the width or the length of any of the belly part, the breast part, or one or both of the side parts. Once the elastic means or other gathering means, inside the channels have been adjusted the flexible protective garment is made to fit tightly around the animal's body, optionally to fit against the elasticity of the elastic means. The number of channels and associated gathering means, such as an elastic means, may vary depending on how large an animal the garment is intended for. A small garment may e.g. only have two channels crosswise the belly part and the side parts, whereas a larger garment may have more, such as three, four or even five crosswise channels. Normally just one longitudinal channel will do to adjust longitudinal length of the belly part and breast part, respectively, but also for these parts more longitudinal channels may be provided.

Preferably, the gathering means, such as an elastic means, inside the channels are adjusted so that the protective garment fits tightly around the animal's body length, including around girth and waist, but not covers the belly girth and genitals. The optimum fit made by adjusting the gathering means inside the associated channels allows room for the animal to move and breathe, but is not so loose that it allows easy passage of draft and water, and does not restrict the animals movements.

The "girth" or chest of e.g. a dog or cat is the measurement taken all the way around the biggest part of the dog's ribcage, generally just behind the withers down and around just behind the forelegs and back just behind the withers.

The "waist" of a dog or cat is measured all the way around the dog or cat just behind the last rib up around the body.

The "belly girth" of a dog or cat is measured around the thin point of the animal's body, just in front of the animal's hind legs at the location of the genitals for a male dog or cat.

In an expedient embodiment the fastener is a zipper selected from a fully separable zipper or a partly separable zipper. A zipper is fast to handle and not susceptible to self-open in case of physical impact, as the hook and loop fastener is. The zipper will resist all impact and remain closed when the animal moves around. Moreover, in fitted condition and during dressing the zipper requires just one simple operation to close it, and just one simple operation to open it again when the animal is to be undressed. The position of the closed zipper on the animal's back is of less inconvenience to the animal compared to the bulky hook and loop fasteners located at the ribcage. Hook and loop fasteners even has a tendency to entangle with and accumulate animal hair, which negatively affects attachment force between hook and loop. Due to the separate gathering means inside the channels the fastener can be of a kind that does not contribute in size adjustment, so the length of the fastener can decided in dependency of length of topline of the animal. For very hairy animals at least one of the side edges along the zipper may have a protective protruding flap below a zipper part to prevent hair from entangling the zipper during opening and closing.

Respective side parts may advantageously project axially beyond the front end of the belly part on opposite sides of the breast part towards respective free side part front ends, and oppositely project axially beyond a free rear end of the belly part towards a free side part rear end, respectively. Thus the belly part is the bridge member of the garment between the side parts, which side parts have longer axial length than the belly part. The belly part extends the whole length of the belly area at least from the forelegs to the genitals, preferably not covering the genitals of a male animal at least after adjusting, whereas the side parts are longer and covers the ribcage and the back from the shoulder, optionally also a part of the neck, to the tail. This design has an overall H-shape, wherein the belly part is the bridge member of the H between the vertical side members constituting the side members of the H.

The plurality of channels accommodating elastic means may comprise one or more of
- at least one first channel extending partly or fully across the width of the belly part,
- at least one second channel extending partly or fully across the width of the side part(s),
- at least one third channel extending partly or fully along the length of the belly part,
- at least one fourth channel extending partly or fully along the length of the breast part,
- at least one fifth channel extending partly or fully along a curvature including a free front end edge of the belly part and a free edge of the breast part.

The plurality of channels on different spots and areas of the protective garment expediently confers a high level of size and shape adjustment possibilities in terms of fitting for example around waist and along ribcage, between forelegs and hind legs to keep genitals free of coverage irrespective of a male or female animal, and fitting around and along neck.

In a preferred embodiment
- a first channel may extend into a second channel and has an elastic means in common, and/or
- a third channel extends into a fourth channel and has an elastic means in common.

When the first channel and second channel communicate the elastic means may be common to both so that size of the belly part and size of one or both side parts can take place using the same elastic means. The same applies for a third channel communicating with a fourth channel, which allows the length of the belly part and the breast part to be adjusted in common. A further advantage is that the elastic means of the at least one second channel and the at least fourth channel are very convenient to access for fitting and refitting while a standing animal wear the garment. If the garment was to be fitted via the belly part on an animal wearing the garment and laying on it's back, the side part are not accessible and cannot be gathered to fit. Thus the preferred animal position during fitting would often be standing.

The breast part of the garment extends from the front end of the belly part between the side parts along a longitudinal axis of the belly part towards a free breast part end, so that gaps for the forelegs are delimited between the breast part and the side parts. In order also to fit the garment closely and tightly around the neck and the breast, the free breast part end of the breast part may have a first collar part and the free side part front end may have a second collar part for coupling with the first collar part. When the first collar part and the second collar part are interconnected the gaps for the forelegs are closed and converted into openings that receives the forelegs of the animal. Preferably, the first collar part and the second collar part have adjustable lengths so that the breast and neck measure can be adjusted and adapted to a specific animal.

An elastic means or other gathering means may be externalised from its channel via an opening in the protective flexible garment, thus to be operatable from outside the garment. This way a gathering means such as an elastic means is easy to access for fitting. Surplus of gathering means, such as elastic means, resulting from the size-adjusting process can be removed once a final decision has been taken that the adjusted size is correct. Surplus can be removed simply by cutting it off. Optionally a gathering means, such as an elastic means, can be externalised to the face being exterior to the animal when the animal wears the protective flexible garment to offer the possibility of tuning the size perfectly, and so that no externalised ends of gathering means interfere with the animal, and is of nuisance to the animal.

Optionally a gathering means, and in particular an elastic means, is fitted with one or more cord adjusters along it's length. For example cord adjusters can be mounted on the elastic means next to the inlet or exit of an associated channel, inside which the elastic means is located. The cord adjuster cannot enter the channel and remains outside the channel serving to determining and preserving a fix stretched length of an elastic means at a certain location, and thus of a corresponding part of the overall garment.

A highly comfortable protective flexible garment according to the present invention may be manufactured of one or more layers of flexible fabric, optionally including a layer selected from an insulating fabric layer, a water repelling fabric layer, a fleece layer, a padded fabric layer and/or a quilted fabric layer. Preferably any of the parts and/or layers of the protective flexible garment are sewn together.

A fastening element for a leash may conveniently be provided in relation to the side parts, preferably in the vicinity of the free side part front end of the side parts(s). Because the protective garment according to the present invention is custom-fit to a certain animal, and maintain the same shape, size and design subsequent to having been custom-fit, the dog will have the same experience every time the garment is put on. So when a leash is secured to the fastening elements, for example one or more rings, the dog will have the same satisfactory and secure feeling every same. Thus the animal is easily taught to wear and walk the flexible, protective garment.

In the preferred embodiment the elastic means is simply an elastic string or band. Once such an elastic string or band has been externalised from an associated channel it's stretched length can be kept be tying a knot on the free externalised end so that this free externalised end gets a large head that cannot slip into the channel. Alternatively, a cord adjuster at the free externalised end can serve same purpose.

Advantageously, the breast part may have opposite longitudinal diverging free edges, and the width of the breast part at the attachment to the belly part is smaller than the width of the breast part at the free breast part end. This design of the breast part provided in extension of the belly part is suited to cover the "breast" from the neck at standard collar level down under the animal, between the forelegs, as well as delimiting two foreleg recesses of substantially U-shape.

One or more harness openings may be provided in the side parts to allow externalising at least a part of a harness worn by the animal, below or integral with the garment.

The present invention also relates to a method of fitting the above described and discussed protective flexible garment on a four-legged animal.

The method comprises the steps of
a) providing the protective flexible garment,
b) arranging the belly part on the belly between the forelegs and the hind legs so that the breast part covers the breast of the four-legged animal,
c) folding the side parts towards each other and joining said side parts on the back of the four-legged animal by means of the fastener to encase the main body of said four-legged animal,
d) coupling the first collar part and the second collar part together to surround and tighten around the neck of the four-legged animal, and
e) adjusting the dimensions and shape of any of the belly part, the side part(s) and the breast part by pulling the one or more gathering means, preferably an elastic means, inside the associated one or more channels until the flexible protective garment fits the four-legged animal, and
f) preserving the adjusted length of the elastic means.

Folding the belly part and side parts in step c) includes covering waist, girth and belly girth. When the first collar part and the second collar part are coupled together around the neck the combined collar parts complete the circumference of a "leghole" for a foreleg, which leghole can be given the precise size suited for the four-legged animal due to e.g. a gathering means in form of an elastic means inside the at least one fifth channel extending partly or fully along the free edge of a respective side part and the opposite free edge of the breast part, which free edges are included in said circumference. By tightening or loosening the collar parts the garment can also be adapted to have a neck opening that fits the animal well.

Step f) of preserving the adjusted length of the elastic means may conveniently involve tying a knot on a free externalised end of the elastic means to make a large head that prevent an elastic means from escaping inside the associated channel if the elastic means is allowed to relax. Alternatively or simultaneously one or more cord adjusters may be used to define the selected adjusted length of the elastic means.

The present invention is preferably sued on a dog or a cat. Irrespective of the dog or cat being female or male, puppy, kitten, or older animal, the size and shape of the flexible protective garment according to the present invention can be selected by versatile adjustment features, including but not limited to fasteners, elastic means inside associated channels, and collar parts, so that genitals are kept free of coverage, nipples are covered, and so that the animal is kept warm, fit and safe.

The invention will now be described in further details by way of the drawing showing exemplary embodiments and components of these exemplary embodiments, wherein
Fig. 1 is top view, seen from the face exterior to the animal, of an embodiment of the flexible protective garment prior to being fitted on an animal, thus in disconnected flat condition,
Figs. 1A, 1B and 1C show enlarged scale views of details of the garment seen in fig. 1,
Fig. 2 is a side view of the flexible protective garment seen in fig. 1 in a first initial fitting stage,
Fig. 3 shows the garment seen in fig. 2 in a perspective side view after fitting,
Fig. 4a shows a fragment of the garment seen in fig. 1 with size-adjusted fifth channels,
Fig. 4b shows a fragment of the garment seen in fig. 1 with size-adjusted first channels,
Fig. 4c shows a fragment of the garment seen in fig. 1 with size-adjusted fourth channels,
Fig. 4d shows a fragment of the garment seen in fig. 1 with size-adjusted third channels,
Fig. 5 is a side view of a dog wearing the garment shown and fitted as indicated in the previous figures,
Fig. 6 shows the same seen from the front of the dog,
Fig. 7 shows the same seen from the back of the dog, and
Figs. 8a and 8b shows the same seen from the belly.

Emphasis is made that sizes and proportions of parts of the garment should not be construed as limited as shown in the figures, and may differ depending of animal species, age and sex. The number of channels with gathering means and cord adjusters may also vary, and so may length and kind of collar and fastener. Purely for the sake of convenience the invention is described and shown in relation to a large dog. This should not be construed as limiting the scope of the present invention. The flexible protective coat can be used with any desired animal including pets, such as cats and dogs, but even for protective purposes for domestic animal such as sheep, pigs and cattle, e.g. during recovery or during growth, or for animals in zoos, such as wolves and foxes. There is no upper or smaller limit for size, and a diversity of kinds of materials and number of layers for the garment can be used. The fabric layer structure may be chosen in accordance with the intended use of the garment. Thus for cold conditions the garment may include an insulation layer. For wet weather the exterior layer may be water-repellant. Windbreaker layers are another option. The fabrics make the channels and the garment conformable to wear for most animal body structures.

The flexible protective garment 1 has a belly part 2 disposed symmetrically along longitudinal axis X between opposite side parts 3a,3b. The belly part 2 has a belly part rear end 4 and a belly part front end 5. The belly part front end 5 extends into a breast part 6, which breast part 6 extends towards a free breast part end 7 provided with a first collar part 8 in form of a first strap 9 having a center part 9c secured to the free breast part end 7, which center part extend towards opposite free straps ends 9a,9b for coupling with second collar parts 10a,10b on respective free side part front ends 11a,11b on the side parts 3a,3b. Opposite the free side part front ends 11a,11b the side parts 3a,3b have free side part rear ends 12a,12b that together with a free longitudinal side part edges 13a,13b delimit the exterior outline of the respective side parts 3a,3b. The free longitudinal side part edges 13a,13b are provided with respective interacting fastener parts 14a,14b, being zipper halves 14a,14b.

Three first channels 15,16,17 extend across the width of the belly part 2, and these first channels 15,16,17 extend into second channels 15a,16a,17a;15b,16b,17b across the width of the side parts 3a;3b, respectively. A third channel 18 extends in the belly part 2 substantially along the longitudinal axis X, and extends axially into a fourth channel 19 along a part of the length of the breast part 6.

The free side part front ends 11a,11b has leghole edges 20a,20b merging via belly part front end edges 21a,21b into free breast part edges 22a,22b to define an U-shaped edge 23a,23b, which together with the second collar parts 10a,10b can be configured to a closed hole for receiving a foreleg of the dog when the first collar part 8 and the second collar part 10a,10b are coupled together, as will be shown in the subsequent figures. A fifth channel 24a,24b follows the curvature along the contiguous belly part front end edges 21a,21b and breast part edges 22a,22b to allow fitting a leghole 36a,36b to the size of the dog's leg to avoid any flaring portions that would allow wind and water to enter and being susceptible to be grasped by sticks or other matter when the dog plays around..

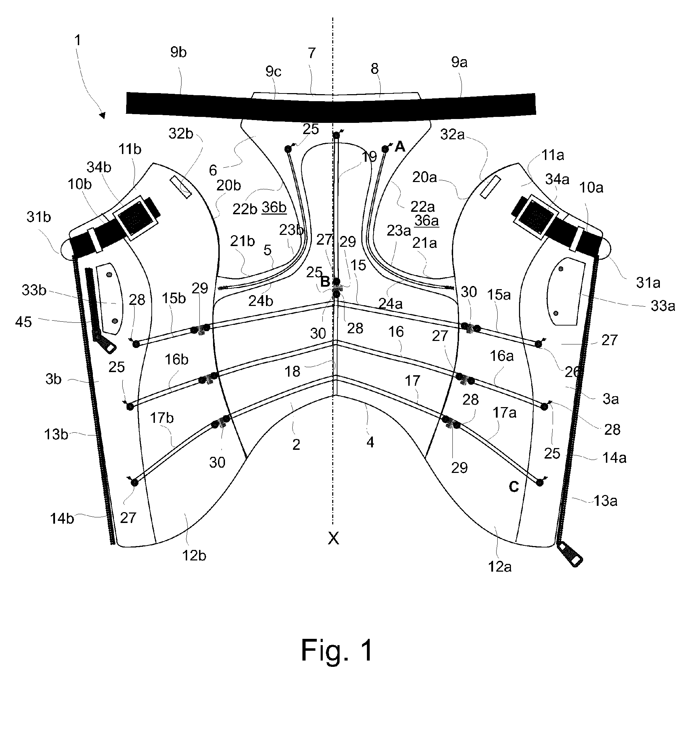

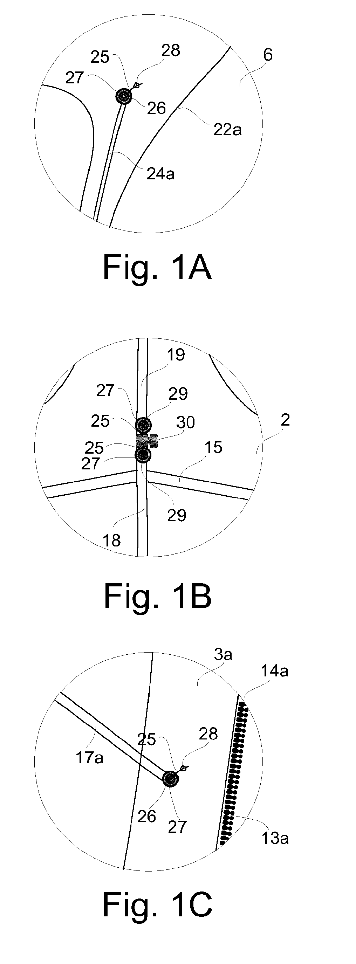

Elastic threads 25 of same or different lengths are inserted in all the previously discussed channels 15,16,17;15a,16a,17a; 15b,16b,17b;18;19;24a,24b. The elastic threads 25 are externalised via exit openings 26 in the side parts 3a,3b, the belly part 2 and the breast part 6. An exit opening 26 may be reinforced by a reinforcing ring 27 and the elastic threads 25 given a knot 28 at it's free opposite end to prevent the elastic thread 25 from being pulled inside the associated channel due to the inherent elastic force. Intermediate exit holes 29 along a channel serve to provide a further option of externalising the elastic thread 25 at locations convenient for size and shape adjustment. A cord adjuster 30 in relation to an exit opening 26 or to an intermediate exit hole 29 makes it possible to gather a channel locally and hold the channel, and thus the associated part of the garment 1, in gathered position and condition, often reduced in size but often still elastic. So the adjusted shape may still be capable to adapt to the dog's shape the best possible even after customised fitting. Elastic threads, exit opening, reinforcing rings, intermediate exit hole and cord adjusters are the same at all spots and therefore just one or few reference numeral each is shown in fig. 1 for these features, irrespective of different positions on, in and at the garment 1. One set of reference numbers is indicated on each part 2,3a,3b,6 of the garment 1 seen in fig. 1.

A leash ring 31a,31b are provided at both the free side part front ends 11a,11b in relation to the zipper halves 14a,14b. The second collar parts 10a,10b have buckles 34a,34b or similar means suited for coupling with the first collar parts 8, the free ends straps 9a,9b of which first collar parts 8 are passed through strap guide holes 32a,32b provided in the free side part front ends 11a,11b in the vicinity of the second collar parts 10a,10b. In the alternative both the second collar parts 10a,10b and the first collar parts 8 may both have buckle parts. Small pockets 33a,33b on the side parts 3a,3b serve to hold items such as treats, identification, etc.

Figs. 1A, 1B, and 1C are enlarged scale views of the details indicated at letters A, B and C, respectively, in fig. 1, to better overview the interacting elastic thread 25, how a knot 28 is provided at a free end of an elastic thread 25, that elastic threads 25 are passed through the reinforcing ring 27, and use of the cord adjusters 30.

The cord adjusters 30 serve for shortening or lengthening the elastic thread 25. It is often a little block or item of hard plastic material perforated with two holes through which the elastic thread 25 pass in proximity to intermediate exit holes 29, and in which the elastic threads 25 are retained in any desired position by friction and their own structure. Beyond the cord adjuster 30 the elastic thread 25 is externalised via exit openings 26 in side parts 3a,3b, and the length of the elastic threads 25 is in relaxed condition even after adjusting. Any surplus of externalised elastic thread 25 can be cut off and a knot 28 be tied at the free end of the elastic thread.

The possibilities and effects of shortening and/or lengthening the elastic thread 25 in order to adjust the size and dimension of the garment 1 will be more clear from the discussion of the subsequent figures.

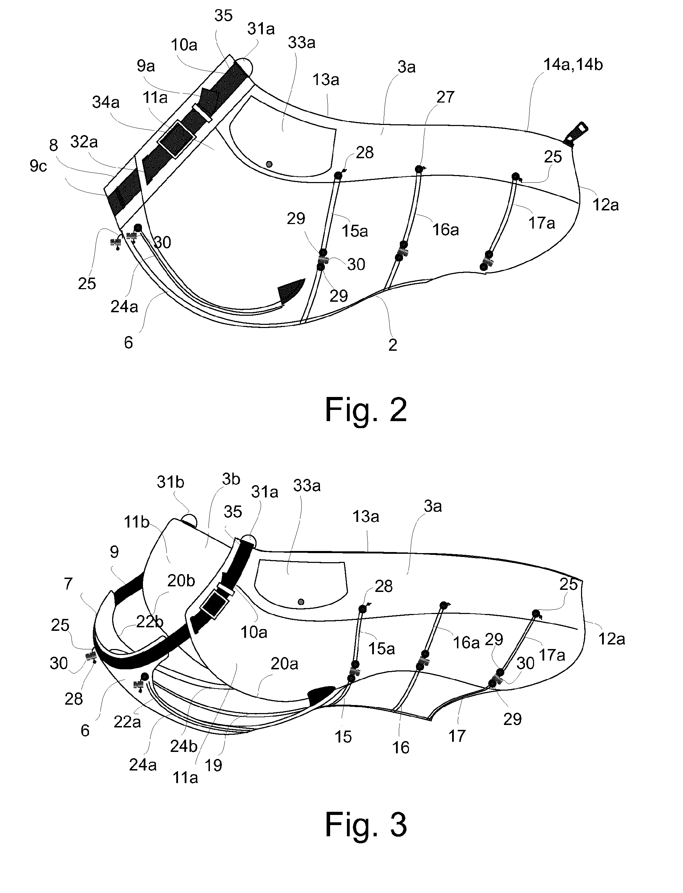

The flexible protective garment 1 is shown in flat condition in fig. 1. The parts or panels of the garments 1 is one unit, a single piece, obtained by sewing the fabric layers together, as well as sewing the individual parts or panels together. The flat-laid garment constitutes a blank that can be transformed to fit tightly to an animal's body shape. In fig. 2 the garment has been transformed into a three-dimensional structure prepared for fitting on the animal.

Fig. 2 shows the garment 1 shown in fig. 1 seen from the side in an initial fitting stage. It should be noted that initial and final fitting can be done during dressing the dog, or initial fitting can be done prior to dressing the dog, and final fitting and shape-tuning of the garment 1 take place when the dog wears the garment 1 the first time. Subsequently fitting procedures are rarely needed.

In fig. 2 none of the elastic means 25 has yet been tightened inside their respective associated channels. The zipper halves 14a,14 have been joined and thus the fastener 14a,14b has been closed. Also, the first collar parts 8 and the second collar parts 10a,10b have been initially coupled together to later become constitute an in-build collar 35 for the dog.

Collar parts 8,10a,10b may, but need not, be decoupled each time the dog is dressed/undressed. Some may prefer that the legholes 36a,36b are made initially ready for the dog to pass it's forelegs through, as will be apparent from the subsequent figures.

Fig. 3 shows the garment seen in fig. 2 in a perspective side view after fitting but with the fastener 14a,14b partly closed to visualize both side parts 3a,3b. The first channels 15,16,17 across the width of the belly part 2 and the second channels 15a,16a,17a;15b,16b,17b across the width of the side parts 3a;3b have now been shortened and gathered by tightening the elastic threads 25 running inside these first channels and second channels. Once the appropriate gathering of the first channels 15,16,17 and the second channels 15a,16a,17a;15b,16b,17b have been achieved, the cord adjusters 30 are locked exterior to the respective channels. Similar procedure are performed for the third channel 18 and the fourth channel 19 to adjust the axial length of the belly part and the breast part 6 in order to intimately also line the belly and the breast once the size-adjusted garment 1 are put on the dog. Circumference of legholes 36a,36b, delimited by belly part front end edges 21a,21b, breast part edges 22a,22b and collar 35, are adjusted by lengthening or shortening the elastic threads 25 inside the fifth channels 24a,24b. Once the proper lengths of all channels have been determined the relaxed free length of elastic threads 25 are externalised via second channels 15a,16a,17a;15b,16b,17b and fourth channel 19 to exit openings 26, where the free end of the elastic thread 25 has been given an optional knot 28 to prevent the elastic thread 25 from escaping inside a channel again. If the externalised free length is too long a part of it can be cut off. Alternatively, if needed, also the part of a channel extending from an intermediate exit hole 29 to an exit opening 26 can be adjusted in a manner similar to the remainder of these channels. The size and/or shape adjustment of the breast part 6, positioned or positionable between the forelegs, avoids flappy garment material on both the right side and the left side of the animal.

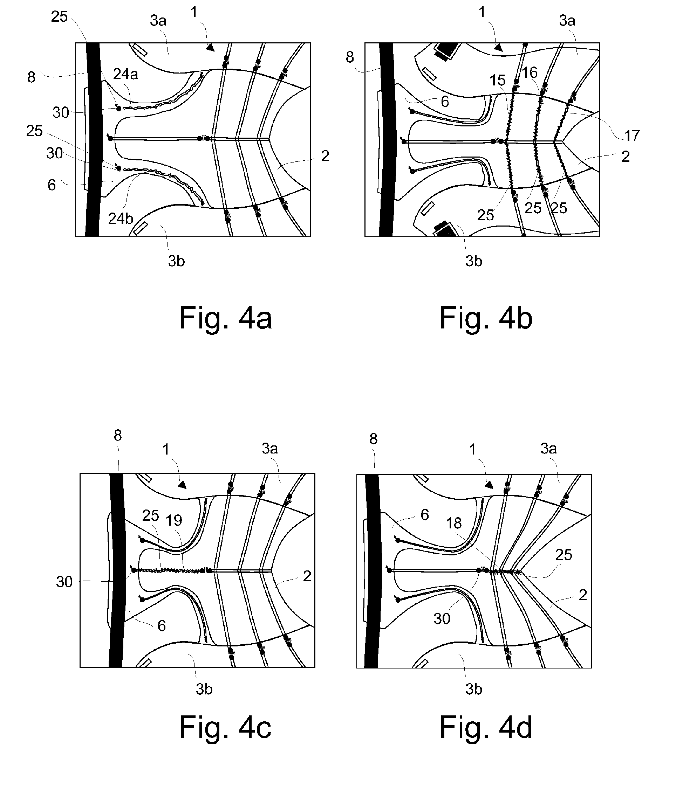

The effects of adjusting the length of the different individual channels are illustrated in figs. 4a, 4b, 4c and 4d.

Fig. 4a shows from below a fragment of the garment seen in fig. 1 with size-adjusted fifth channels to conform the garment around the dog's forelegs.

Fig. 4b shows from below a fragment of the garment 1 seen in fig. 1 with size-adjusted first channels 15,16,17 where the width of the belly part 2 has been reduced to fit against and line the dog's belly. The width of the side parts 3a,3b and the length of the belly part 2 are left not-gathered, and this configuration would be convenient to wear by a female dog or cat having her genitals closer to the hind legs than a male dog or cat.

Fig. 4c shows from below a fragment of the garment 1 seen in fig. 1 with size-adjusted fourth channel 19 where the length of the breast part 6 has been reduced to fit against and line the dog's breast,

Fig. 4d shows from below a fragment of the garment 1 seen in fig. 1 with size-adjusted third channel 18 of the belly part 2. This configuration would be convenient to wear by a male dog having his genitals closer to his waist and farther from the hind legs than a female dog or cat.

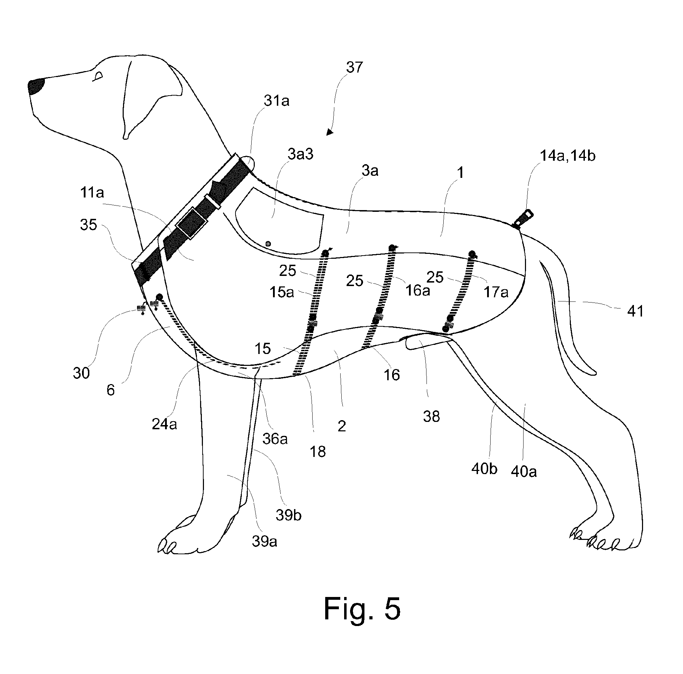

Fig. 5 is a side view of a dog 37 wearing the garment shown and fitted as indicated in the previous figures. The dog 37 is a male dog and his genitals 38 is left free because the garment 1 has been adjusted as shown in fig. 4d. The forelegs 39a,39b are located in legholes 36a,36b and the hind legs 40a,40b and the tail 41 are free of the garment 1. Sleeves (not shown) for the forelegs may be part of the garment 1. The elastic threads 25 are shortened inside the respective gathered channels as described above so that the garment is custom-fitted for this particular dog 37. Other dogs may have less pronounced chests or be longer or shorter. The adjustment possibilities are plural and suited to take such body differences into account.

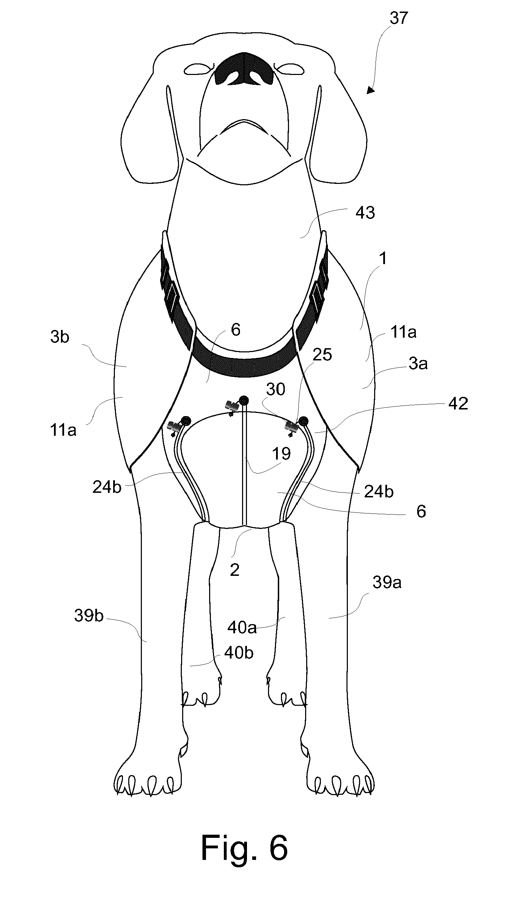

Fig. 6 shows the same from the chest of the dog 37 wearing the garment 1. The fourth channel 19 and fifths channels 24a,24b extend on the breast part 6 to fit tightly to the chest 42. The collar 35 is tightened around the neck 43 to substantially block entry of exterior air.

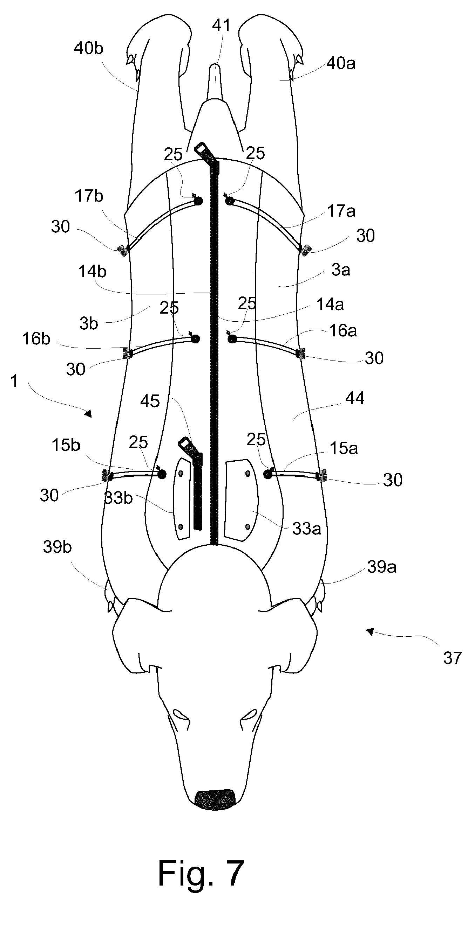

In fig. 7 the dog 37 is viewed from the back 44. The side parts 3aa,3b have been joined by means of zipper halves 14a,14b along the dog's topline so that the garment encases the dog along it's length. The dog may wear a harness, or a harness may be integral with the garment. One or more straps of the harness can be externalised via harness openings 45, of which just one is shown on a side part 3b.

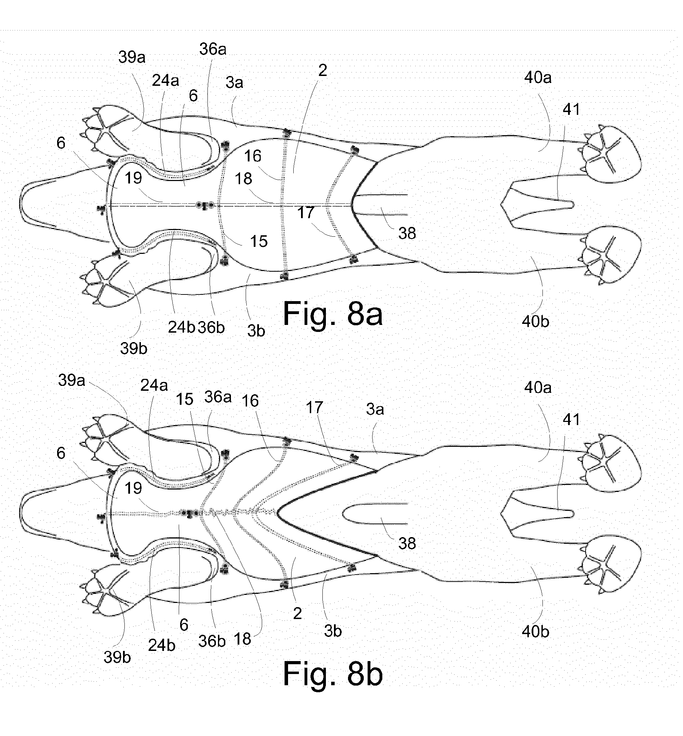

As can be seen from the belly views of figs. 8a and 8b the belly part 2 is length-adjustable. Fig. 8a shows the belly part 2 in unadjusted condition. In the unadjusted condition of the belly part 2, said belly part 2 may be too long and overlap the genitals 38 of the male dog 37, as seen in fig. 8a. Simply by shortening the third channel 18 by pulling the elastic thread 25 inside the third channel 18 of the belly part 2 to pucker the channel, and activating the cord adjuster 30, the garment 1 can be adapted for the body of a certain animal, such as e.g. f the male dog 37 seen in fig. 8a and 8b. This way the exterior part of the genitals 38 of the male dog 37 are kept free, and when the dog 37 urinates, irrespective of lifting his leg or squatting, he cannot accidentally soil the garment 1.

The belly region is a very important area on the dog to protect. Yet it is the most frequent area kept unprotected by known outdoor wear brands. On the female chest and belly it is very important to protect the many nipples against cold weather, especially when the dog is giving breast. The long adjustable elastic thread or band 25 inside the third channel 18 and fourth channel 19 going from chest/breast 42 to penis 38 ensures that the penis 38 is outside the belly part 2.

Preferably, the garment 1 of the present invention is used as outdoor wear.

Some of the many advantages of the present invention are summarised below. The advantages include strong hooks or rings for a leash, e.g. iron or steel hooks/rings, adjustable collar, adjustable length of chest and belly parts, adjustable leg sleeves, adjustable belly volume, male/female belly adjustment, elastic belly strings that can be cut off after fitting, easy on and off with zipper on back along topline, side pockets for treats, and in-build name tag.

The novel garment according to the present invention is designed to block air from flowing under the garment by making the entire garment body slim fit due to adjustable belly part, breast part, and optionally also adjustable side parts. Airflow around the neck is blocked due to also the collar being adjustable. The user can decide if the belly part should e.g. be covering a female belly completely or a male belly partly.

The garment according to the present invention is one single unit, thus a one-piece garment that can be assembled on the back of the animal in a fast and simple action. There are no free flaps that can catch the surroundings and no multiple parts to fumble with. The channels with enclosed gathering means facilitate simple and easy custom-fit to the animal's body shape, and the joinable and adjustable collar parts makes a separate collar superfluous.

## Claims

1. A protective flexible garment (1) for an animal (37) comprising
- a belly part (2) defining a longitudinal axis (X),
- side parts (3a,3b) extending on opposite sides of the belly part (2),
- a breast part (6) extending from a front end of the belly part (2) between the side parts (3a,3b) along the longitudinal axis of the belly part (2) towards a free breast part end (7),
**characterised in that**
- the side parts (3a,3b) have free side edges (13a,13b) provided with a fastener (14a,14b) for joining the side parts (3a,3b) on the back of the animal (37).

2. A protective flexible garment (1) according to claim 1, **characterised in that** the protective flexible garment (1) has a plurality of channels (15,16,17;15a,16a,17a; 15b,16b,17b;18,19;24a,24b) accommodating gathering means (25) for adjusting the size and/or shape of any of the belly part (2), the breast part (6), or one or both of the side parts (3a,3b), in particular adjusting at least one of the width or the length of any of the belly part (2), the breast part (6), or one or both of the side parts (3a,3b), preferably the gathering means are an elastic means.

3. A protective flexible garment (1) according to any of claims 1 or 2, **characterised in that** the fastener (14a,14b) is a zipper selected from a fully separable zipper or a partly separable zipper.

4. A protective flexible garment (1) according to any of claims 1, 2 or 3, **characterised in that** respective side parts (3a,3b) project axially beyond the front end (21a,21b) of the belly part (2), on opposite sides of the breast part (6) towards a free side part front end (11a,11b), and projects beyond a free rear end (4) of the belly part (2) towards free side part rear end (12a,12b), respectively.

5. A protective flexible garment (1) (1) according to any of claims 3 or 4, **characterised in that** the plurality of channels (15,16,17;15a,16a,17a;15b,16b,17b;18,19;24a,24b) accommodating gathering means (25) comprises one or more of
- at least one first channel (15,16,17) extending partly or fully across the width of the belly part (2),
- at least one second channel (15a,16a,17a;15b,16b,17b) extending partly or fully across the width of the side part (s) (3a,3b),
- at least one third channel (18) extending partly or fully along the length of the belly part (2),
- at least one fourth channel (19) extending partly or fully along the length of the breast part (6),
- at least one fifth channel (24a,24b) extending partly or fully along a curvature including a free front end edge (21) of the belly part (2) and a free breast part edge (22a,22b) of the breast part (6).

6. A protective flexible garment (1) according to any of the preceding claims 3, 4 or 5, **characterised in that**
- a first channel (15,16,17) extends into a second channel (15a,16a,17a;15b,16b,17b) and has a gathering means (25) in common, and/or
- a third channel (18) extends into a fourth channel (19) and has a gathering means (25) in common.

7. A protective flexible garment (1) according to any of the preceding claims 1 - 6, **characterised in that** the free breast part end (7) of the breast part (6) has a first collar part (8) and the free side part front ends (11a,11b) has a second collar part (10a,10b) for coupling with the first collar part (8), preferably the first collar part (8) and the second collar parts (10a,10b) have adjustable lengths.

8. A protective flexible garment (1) according to any of the preceding claims 3 - 6, **characterised in that** a gathering means (25) is externalised from its associated channel (15,16,17;15a,16a,17a;15b,16b,17b;18,19;24a,24b) via an opening (26,29) in the protective flexible garment (1), optionally a gathering means (25) is externalised to the face being exterior to the animal (37) when the animal (37) wears the protective flexible garment (1), optionally a gathering means (25) is fitted with one or more cord adjusters (30) along its length.

9. A protective flexible garment (1) according to any of the preceding claims 1 - 8, **characterised in that** the protective flexible garment (1) is manufactured of one or more layers of flexible fabric, optionally including a layer selected from an insulating fabric layer, a water repelling fabric layer, a fleece layer, a padded fabric layer and/or a quilted fabric layer, preferably any of the parts and/or layers of the protective flexible garment (1) are sewn together.

10. A protective flexible garment (1) according to any of the preceding claims 1 - 9, **characterised in that** a fastening element (31a,31b) for a leash is provided in relation to the side parts (3a,3b), preferably in the vicinity of the free side part front ends (11a,11b) of the side parts(s) (3a,3b).

11. A protective flexible garment (1) according to any of the preceding claims 2 - 10, **characterised in that** the gathering means (25) is an elastic string or band.

12. A protective flexible garment (1) according to any of the preceding claims 1 - 11, **characterised in that** the breast part (6) has opposite longitudinal diverging free edges (22a,22b), and the width of the breast part (6) at the attachment to the belly part (2) is smaller than the width of the breast part (6) at the free breast part end (7).

13. A method of fitting the protective flexible garment (1) according to any of the preceding claims 1 - 12 on a four-legged animal (37), **characterised in that** the method comprises the steps of
a) providing the protective flexible garment (1),
b) arranging the belly part (2) on the belly between the forelegs (39a,39b) and the hind legs (40a,40b) so that the breast part (6) covers the breast of the four-legged animal (37),
c) folding the side parts (3a,3b) towards each other and joining said side parts (3a,3b) on the back (44) of the four-legged animal (37) by means of the fastener to encase the main body of said four-legged animal (37),
d) coupling the first collar past (8) and the second collar part (10a,10b) together to surround and tighten around the neck (43) of the four-legged animal (37), and
e) adjusting the dimensions and shape of any of the belly part (2), the side part(s) (3a,3b) and the breast part (6) by pulling the one or more gathering means (25), preferably an elastic means, inside the associated one or more channels (15,16,17;15a,16a,17a;15b, 16b,17b;18,19;24a,24b) until the flexible protective garment (1) fits the four-legged animal (37), and
f) preserving the adjusted length of the one or more gathering means (25) and associated channels (15,16,17;15a,16a,17a;15b,16b,17b;18,19;24a,24b).

14. A method according to claim 13 **characterised in that** step f) of preserving the adjusted length of the gathering means (25) involves tying a knot (28) on a free externalised end and/or defining the adjusted length of the gathering means (25) by means of cord adjusters (30).

15. Use of the protective flexible garment (1) according to any of the preceding claims 1 - 13 for a female or male dog (37) or cat.
